# EUROPEAN PATENT SPECIFICATION

(11) **EP 4 663 489 B1**
(45) Date of publication and mention of the grant of the patent: **16.09.2026**
(21) Application number: 24181821.0
(22) Date of filing: 12.06.2024
(51) Int. Cl.: B60S 1/38, B60S 1/40

(54) **ACCESSORY ASSEMBLY STRUCTURE OF WINDSHIELD WIPER**
ZUBEHÖRMONTAGESTRUKTUR FÜR SCHEIBENWISCHER
STRUCTURE D'ENSEMBLE ACCESSOIRE D'ESSUIE-GLACE

(43) Date of publication of application: 17.12.2025
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(56) References cited:
- EP-B1- 3 233 591
- DE-A1- 102010 052 313
- US-A1- 2013 312 208
- US-A1- 2016 375 874
- US-B2- 11 007 982

## Description

### Technical Field

The technical field relates to a windshield wiper, and more particularly relates to an accessory assembly structure of a windshield wiper.

### Description of Related Art

A windshield wiper is installed on the outside of the windshield and connected to the wiper arm of the car. The wiper arm drives the windshield wiper to swing repeatedly on the windshield, thereby scraping off rainwater, stains and other objects on the windshield.

Furthermore, the wiper arm of a windshield wiper is attached to the accessory seat, and metal springs and wiper blades are connected to the bottom of the accessory seat. Accordingly, the wiper arm drives the accessory seat and presses the metal springs and wiper blades to clean the windshield. Moreover, the aforementioned accessory seat and metal springs are assembled through a riveting process. However, this assembly process is cumbersome and time-consuming, and that leads to increase costs. Additionally, the metal springs or accessory seat are easily deformed during the riveting process, resulting in poor appearance and dimensions. Therefore, improvements are necessary.

US 11 007 982 B2 discloses a wiper device comprising a wiper blade adapter having at least one first wiper blade adapter element and at least one second wiper blade adapter element, which mounted such that it can pivot relative to the first wiper blade adapter element in at least one mounted state, and comprising a wiper arm adapter, which is coupled to the second wiper blade adapter element in the mounted state. According to the invention, the wiper blade adapter has a security unit, which is provided to allow a removal of the wiper arm adapter from the wiper blade adapter exclusively in at least one removal pivot position of the wiper arm adapter relative to the first wiper blade adapter element.

US 2013/312 208 A1 discloses a connecting arrangement for connecting a wiper blade to a wiper arm for a windscreen wiper system of a vehicle. An adaptor for holding the wiper blade is fitted onto the wiper arm in an installation direction running transversely with respect to a wiping surface definable by the wiping movement of the wiper blade. The connecting arrangement includes a securing element designed as a sliding latch arranged on the wiper arm. The sliding latch, which has a U-profile in cross section, serves for the positionally secured holding of the adaptor on the wiper arm, and the sliding latch is displaceable along the wiper arm from an installation position into a functional position securing the adaptor. The sliding latch has a back and two limbs, and at least one projection engaging around the wiper arm on the lower side is arranged on the limbs of the sliding latch.

In view of the above drawbacks, the inventor proposes this disclosure based on his expert knowledge and elaborate researches in order to solve the problems of related art.

### SUMMARY OF THE DISCLOSURE

One object of this disclosure is to provide an accessory assembly structure for a windshield wiper to simplify the assembly process, in which the accessory piece is securely combined with the accessory seat to prevent loosening, thereby providing a firm combination.

This disclosure is an accessory assembly structure includes a sliding cover, a driving arm and an accessory piece. The sliding cover includes a shell. The shell includes a receiving slot, a plurality of blocking ribs and a pair of stopping blocks located in the receiving slot. The driving arm includes an arm body and a cover connected to the arm body. The cover includes a plurality of sockets on two sides thereof. The cover is inserted in the receiving slot and configured to move relative to the sliding cover along the blocking ribs and the pair of stopping blocks. The accessory piece is mounted in the cover. The accessory piece includes a plurality of latching blocks and a pair of latching slots. Each latching block includes an inclined top and is positioned in the socket along the inclined top. The sliding cover is configured to move toward the arm body to make the pair of stopping blocks move into the pair of latching slots, and the sliding cover is positioned on the accessory piece through the pair of stopping blocks being engaging with the pair of latching slots. The invention is characterized in that each latching slot is defined by a U-shaped opening and a protrusion located on a top of the U-shaped opening, and a dimension of the U-shaped opening is corresponding to a shape of the stopping block, and that one side of each stopping block is blocked by each protrusion to be free from disengaging with the U-shaped opening.

In one embodiment of this disclosure, the accessory assembly structure further includes an accessory seat, and the accessory piece is attached to the accessory seat.

In one embodiment of this disclosure, the blocking ribs are disposed spacedly on the inner wall of the shell, and the pair of the stopping blocks are located at an opening of the receiving slot.

In one embodiment of this disclosure, the shell includes a slide rail located between the inner wall and each of the stopping blocks, and the slide rail includes a guiding ramp disposed on the end thereof facing the arm body.

In one embodiment of this disclosure, the cover includes a pair of side walls, and the cover is inserted in the receiving slot through each side wall moving along the guiding ramp and the slide rail.

In one embodiment of this disclosure, the accessory piece includes a pair of clearance slots communicating with the pair of latching slots. The sliding cover is configured to longitudinally move into the accessory piece through the pair of stopping blocks moving along the clearance slots and laterally move into the pair of latching slots.

In one embodiment of this disclosure, each latching block is a trapezoidal block, and each socket includes a positioning plane and a positioning slope corresponding to a shape of each latching block. One side plane of each latching block abuts against the positioning plane to make the inclined top abut against the positioning slope.

In one embodiment of this disclosure, the accessory piece includes a supporting plate connected to the pair of latching slots.

In one embodiment of this disclosure, an elastic arm is located at the bottom of the U-shaped opening of each latching slot, and each elastic arm includes a chamfer at the end thereof facing the stopping block.

In comparison with the related art, the accessory assembly structure of a windshield wiper in this disclosure includes a plurality of blocking ribs and a pair of stopping blocks disposed on the sliding cover. The cover of the driving arm includes a plurality of sockets on two sides thereof. Furthermore, the accessory piece includes a plurality of latching blocks and a pair of latching slots, and each latching block includes an inclined top. Thus, each latching block is positioned in the sockets along the inclined top and embedded in the cover. Accordingly, when the sliding cover moves toward the driving arm, the stopping blocks moves into the slot, and the sliding cover is positioned on the accessory through the stopping blocks being engaged with the latching slots. Therefore, the accessory assembly structure of a windshield wiper is simplified, and the accessory piece is firmly connected to the accessory seat to prevent loosening.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 depicts a perspective schematic view of the accessory assembly structure of a windshield wiper in this disclosure.
FIG. 2 depicts a perspective exploded schematic view of the accessory assembly structure of a windshield wiper in this disclosure.
FIG. 3 depicts a schematic view of the sliding cover combining with the driving arm in this disclosure.
FIG. 4 depicts a cross-sectional view of the combination of the sliding cover and the driving arm in this disclosure.
FIG. 5 depicts a schematic view of the driving arm combining with the accessory piece in this disclosure.
FIG. 6 depicts a cross-sectional view of the combination of the driving arm and the accessory piece in this disclosure.
FIG. 7 depicts a cross-sectional view of the accessory assembly structure of a windshield wiper in this disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

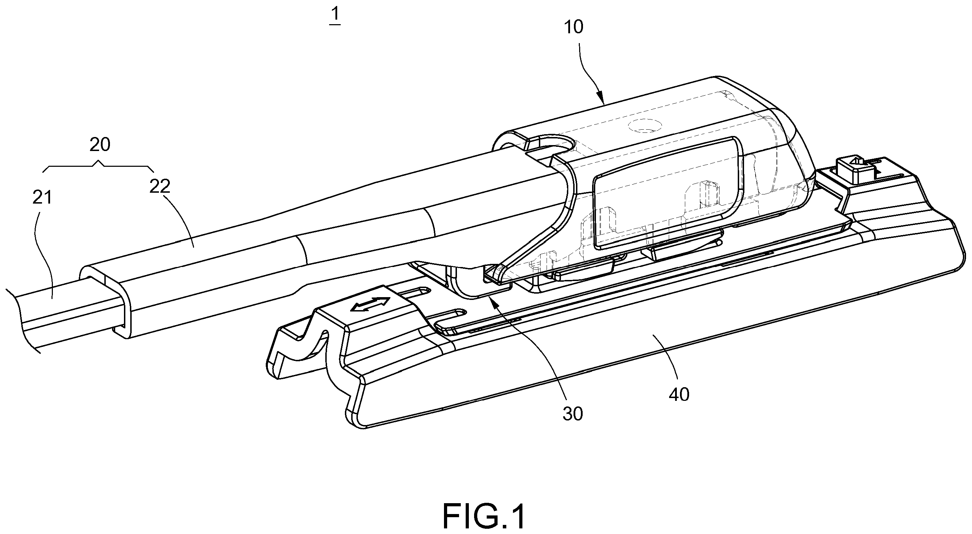

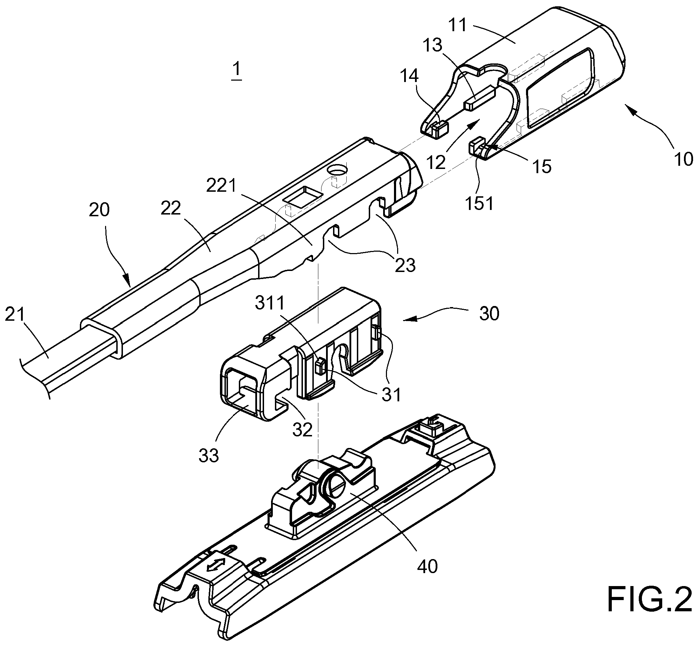

Please refer to FIG.1 and FIG. 2, which depict a perspective schematic view and a perspective exploded schematic view of the accessory assembly structure of a windshield wiper. The accessory assembly structure 1 in this disclosure includes a sliding cover 10, a driving arm 20, an accessory piece 30 and an accessory seat 40. The sliding cover 10 is slidably combined with the driving arm 20. The accessory piece 30 is embedded in the accessory seat 40. Additionally, the driving arm 20 is mounted on the accessory piece 30 and combined with the accessory piece 30 through the sliding cover 10 being engaged with the accessory piece 30 to complete the accessory assembly structure 1. More detailed descriptions of the accessory assembly structure 1 are as follows.

The sliding cover 10 includes a shell 11. The shell 11 includes a receiving slot 12, a plurality of blocking ribs 13 and a pair of stopping blocks 14 located in the receiving slot 12. The blocking ribs 13 are spaced apart from each other and located on the inner wall of the shell 11. The pair of the stopping blocks 14 are located at the opening of the receiving slot 12. Additionally, the shell 11 includes a slide rail 15 located between the inner wall and each of the stopping blocks 14.

The driving arm 20 includes an arm body 21 and a cover 22 connected to the arm body 21. The cover 22 includes a plurality of sockets 23 on two sides thereof. The cover 22 is inserted in the receiving slot 12 and configured to move relative to the sliding cover 10 along the blocking ribs 13 and the pair of stopping blocks 14. Moreover, the accessory piece 30 is mounted in the cover 22. The accessory piece 30 includes a plurality of latching blocks 31 and a pair of latching slots 32. In this embodiment, each latching block 31 is a trapezoidal block and includes an inclined top 311. The accessory piece 30 includes a supporting plate 33 connected to the pair of latching slots 32. The arrangement of the supporting plate 33 may increase the supporting force of the pair of latching slots 32.

In this embodiment, the sliding cover 10 includes a slide rail 15 on one side of the stopping block 14. On the other hand, the cover 22 includes a hook 24 on the rear side of the socket 23 (in the direction approaching the arm body 21). Additionally, the slide rail 15 includes a guiding ramp 151 on the outer end thereof facing the arm body 21. The cover 22 includes a pair of side walls 221, and the cover 22 is inserted into the receiving slot 12 through each side wall 221 moving along the guiding ramp 151 and the slide rail 15.

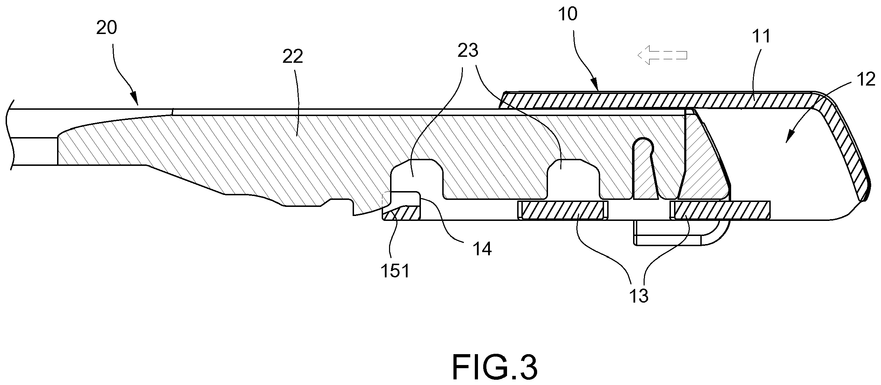

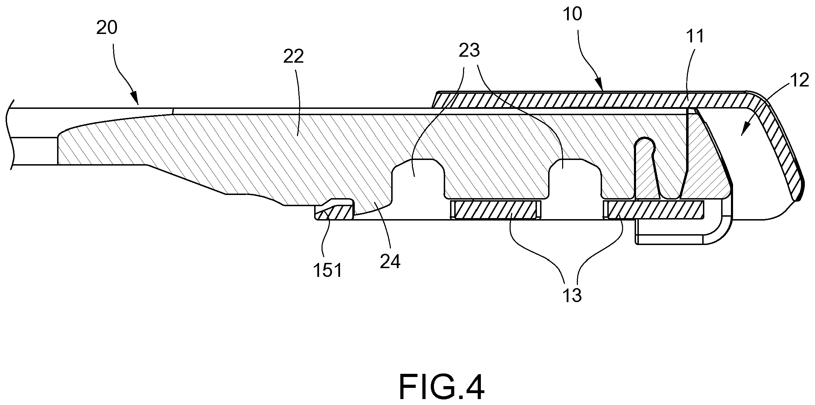

Please also refer to FIG. 3 and FIG. 4, which depict a schematic view of the sliding cover combining with the driving arm in this disclosure and a cross-sectional view of the combination of the sliding cove and the driving arm in this disclosure. The cover 22 of the driving arm 20 in this disclosure is inserted into the receiving slot 12 of the sliding cover 10. The cover 22 moves relative to the sliding cover 10 along the blocking ribs 13 and the pair of stopping blocks 14. It should be noted that after the sliding cover 10 is combined with the cover 22, the hook 24 may block the front side of the slide rail 15, preventing the sliding cover 10 from moving away from the arm body 21. However, it may still move in a direction closer to the arm body 21.

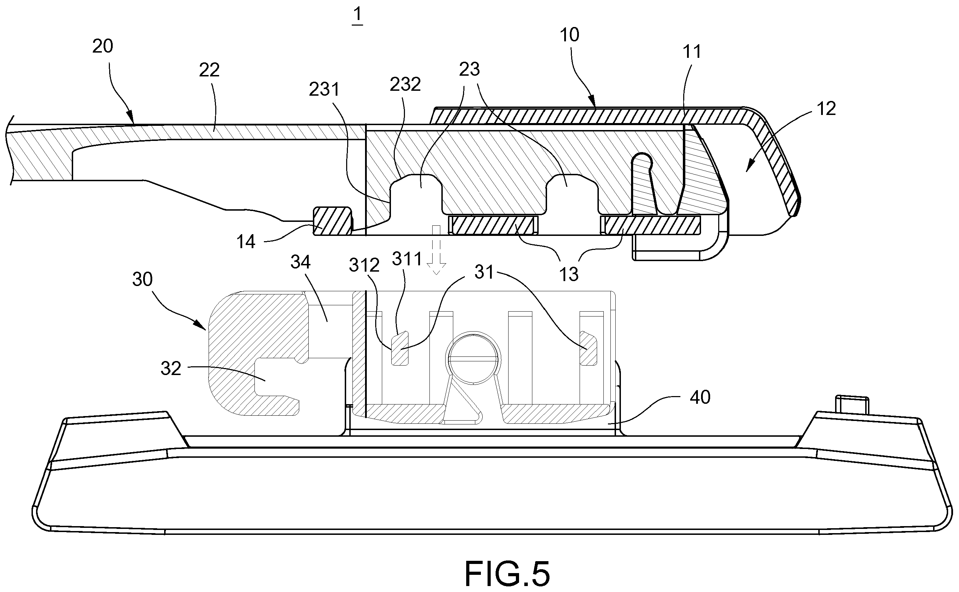

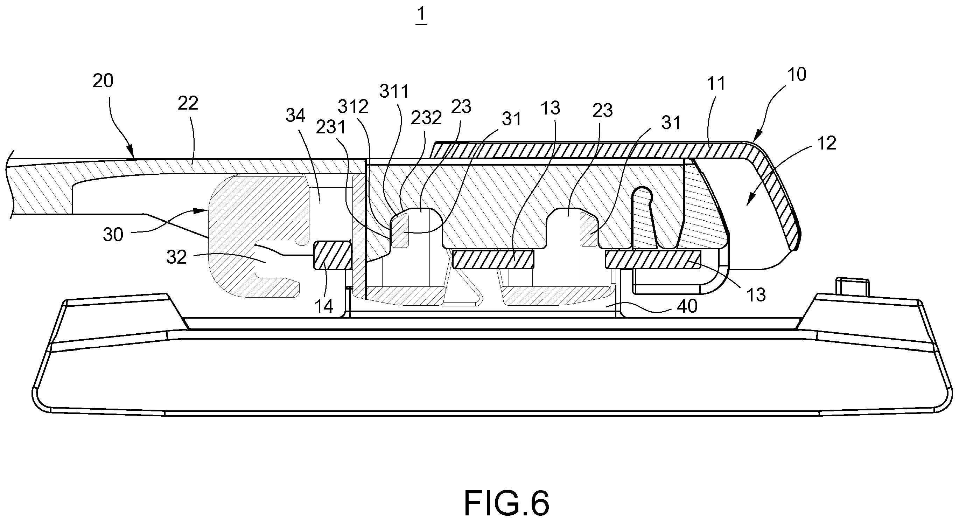

Please further refer to FIG. 5 and FIG. 6, which depict a schematic view of the driving arm combining with the accessory piece in this disclosure and a cross-sectional view of the combination of the driving arm and the accessory piece in this disclosure. After the sliding cover 10 is coupled to the driving arm 20, the driving arm 20 further moves toward the accessory piece 30 for assembly. The socket 23 of the driving arm 20 is aligned with the latching blocks 31 to make the driving arm 20 be mounted on the accessory piece 30. It is worth noticing that each socket 23 includes a positioning plane 231 and a positioning slope 232 corresponding to the shape of the latching block 31. Accordingly, one side plane 312 of each latching block 31 abuts against the positioning plane 231 to make the inclined top 311 abut against the positioning slope 232. That is, each latching block 31 is positioned in the socket 23 along the inclined top 311 and the side plane 312.

It should be noted that the accessory piece 30 includes a pair of clearance slots 34 communicating with the pair of latching slots 32. The sliding cover 10 longitudinally moves into the accessory piece 30 through the pair of stopping blocks 14 moving along the clearance slots 34.

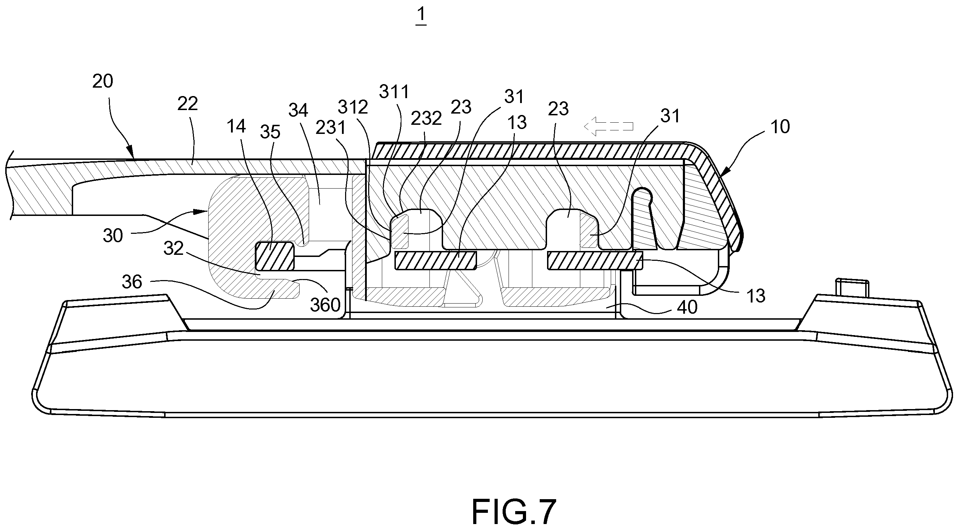

Please refer to FIG. 7, which depicts a cross-sectional view of the accessory assembly structure of a windshield wiper in this disclosure. The sliding cover 10 and the driving arm 20 longitudinally moves into the accessory piece 30, as shown in FIG. 5, and are positioned as shown in FIG. 6, and then the sliding cover 10 moves toward the arm body 21, so that the pair of stopping blocks 14 laterally moves into the pair of sockets 32. Accordingly, the sliding cover 10 is positioned on the accessory piece 30 through the pair of stopping blocks 14 being engaged in the pair of sockets 32. It is worth noting that the blocking ribs 13 in this disclosure are arranged spacedly corresponding to the sockets 23. When the sliding cover 10 is positioned on the accessory piece 30, the blocking ribs 13 may block one side of the latching blocks 31.

According to the invention, each latching slot 32 is defined by a U-shaped opening and a protrusion 35 located on the top of the U-shaped opening. Additionally, the dimension of the U-shaped opening is corresponding to the shape of the stopping block 14, and one side of each stopping block 14 is blocked by each protrusion 35 to prevent disengaging from the U-shaped opening. Moreover, an elastic arm 36 is located at the bottom of the U-shaped opening of each latching slot 32, and each elastic arm 36 includes a chamfer 360 at the end thereof facing the stopping block 14. Accordingly, when the pair of stopping blocks 14 laterally move into the pair of sockets 32, they are initially pressed by the protrusion 35. Subsequently, as the stopping blocks 14 move, the elastic arm 36 deforms, thereby reducing the resistance for the stopping blocks 14 entering the sockets 32. Additionally, the chamfer 360 of the elastic arm 36 is disposed to facilitate the movement of the stopping blocks 14 into the sockets 32.

Therefore, the sliding cover 10, the driving arm 20 and the accessory piece 30 are locked with each other to prevent from being separated, thereby providing a firmly combination of the accessory assembly structure 1 of a windshield wiper.

## Claims

1. An accessory assembly structure (1) of a windshield wiper, the accessory assembly structure (1) comprising:
a sliding cover (10), comprising a shell (11), the shell (11) comprising a receiving slot (12), a plurality of blocking ribs (13) and a pair of stopping blocks (14) located in the receiving slot (12);
a driving arm (20), comprising an arm body (21) and a cover (22) connected to the arm body (21), the cover (22) comprising a plurality of sockets (23) defined on two sides thereof, wherein the cover (22) is inserted in the receiving slot (12) and configured to move relative to the sliding cover (10) along the blocking ribs (13) and the pair of stopping blocks (14); and
an accessory piece (30), mounted in the cover (22), comprising a plurality of latching blocks (31) and a pair of latching slots (32), each latching block (31) comprising an inclined top (311) and positioned in each socket (23) along the inclined top (311);
wherein the sliding cover (10) is configured to move toward the arm body (21) to make the pair of stopping blocks (14) move into the pair of latching slots (32), and the sliding cover (10) is positioned on the accessory piece (30) through the pair of stopping blocks (14) being engaged with the pair of latching slots (32),
**characterized in that**
each latching slot (32) is defined by a U-shaped opening and a protrusion (35) located on a top of the U-shaped opening, and a dimension of the U-shaped opening is corresponding to a shape of the stopping block (14), and that one side of each stopping block (14) is blocked by each protrusion (35) to be free from disengaging with the U-shaped opening.

2. The accessory assembly structure (1) according to claim 1, further comprising an accessory seat (40), wherein the accessory piece (30) is attached to the accessory seat (40).

3. The accessory assembly structure (1) according to claim 1, wherein the blocking ribs (13) are disposed spacedly on an inner wall of the shell (11), and the pair of the stopping blocks (14) are located at an opening of the receiving slot (12).

4. The accessory assembly structure (1) according to claim 3, wherein the shell (11) comprises a slide rail (15) located between the inner wall and each stopping block (14), and the slide rail (15) comprises a guiding ramp (151) disposed on an end thereof facing the arm body (21).

5. The accessory assembly structure (1) according to claim 4, wherein the cover (22) comprises a pair of side walls (221), and the cover (22) is inserted in the receiving slot (12) through each side wall (221) moving along the guiding ramp (151) and the slide rail (15).

6. The accessory assembly structure (1) according to claim 1, wherein the accessory piece (30) comprises a pair of clearance slots (34) communicating with the pair of latching slots (32), and the sliding cover (10) is configured to longitudinally move into the accessory piece (30) through the pair of stopping blocks (14) moving along the clearance slots (34) and laterally move into the pair of latching slots (32).

7. The accessory assembly structure (1) according to claim 1, wherein each latching block (31) is a trapezoidal block, and each socket (23) comprises a positioning plane (231) and a positioning slope (232) corresponding to a shape of each latching block (31), and one side plane (312) of each latching block (31) abuts against the positioning plane (231) to make the inclined top (311) abut against the positioning slope (232).

8. The accessory assembly structure (1) according to claim 1, wherein the accessory piece (30) comprises a supporting plate (33) connected to the pair of latching slots (32).

9. The accessory assembly structure (1) according to claim 1, wherein an elastic arm (36) is located at a bottom of the U-shaped opening of each latching slot (32), and each elastic arm (36) comprises a chamfer (360) located at an end thereof facing the stopping block (14).

## Patentansprüche

1. Zubehör-Montagestruktur (1) für einen Scheibenwischer, wobei die Zubehör-Montagestruktur (1) umfasst:
eine Schiebeabdeckung (10), die ein Gehäuse (11) umfasst, wobei das Gehäuse (11) einen Aufnahmeschlitz (12), mehrere Blockierrippen (13) und ein Paar Arretierblöcke (14) umfasst, die sich im Aufnahmeschlitz (12) befinden;
einen Antriebsarm (20), der einen Armkörper (21) und eine mit dem Armkörper (21) verbundene Abdeckung (22) umfasst, wobei die Abdeckung (22) mehrere an zwei Seiten davon ausgebildete Aufnahmen (23) umfasst, wobei die Abdeckung (22) in den Aufnahmeschlitz (12) eingesetzt und so ausgebildet ist, dass sie sich relativ zur Schiebeabdeckung (10) entlang der Blockierrippen (13) und des Paares von Arretierblöcken (14) bewegen kann; und
ein in der Abdeckung (22) montiertes Zubehörteil (30), das eine Vielzahl von Verriegelungsblöcken (31) und ein Paar Verriegelungsschlitze (32) umfasst, wobei jeder Verriegelungsblock (31) eine geneigte Oberseite (311) aufweist und entlang der geneigten Oberseite (311) in jeder Aufnahme (23) positioniert ist;
wobei die Schiebeabdeckung (10) so ausgebildet ist, dass sie sich in Richtung des Armkörpers (21) bewegt, um das Paar von Arretierblöcken (14) in das Paar von Verriegelungsschlitzen (32) zu bewegen, und die Schiebeabdeckung (10) auf dem Zubehörteil (30) positioniert wird, indem das Paar von Arretierblöcken (14) in das Paar von Verriegelungsschlitzen (32) eingreift,
**dadurch gekennzeichnet, dass**
jeder Verriegelungsschlitz (32) durch eine U-förmige Öffnung und einen an der Oberseite der U-förmigen Öffnung angeordneten Vorsprung (35) definiert ist und eine Abmessung der U-förmigen Öffnung der Form des Arretierblocks (14) entspricht, und dass eine Seite jedes Arretierblocks (14) durch den jeweiligen Vorsprung (35) blockiert ist, um ein Lösen aus der U-förmigen Öffnung zu verhindern.

2. Zubehör-Montagestruktur (1) nach Anspruch 1, die ferner einen Zubehörträger (40) umfasst, wobei das Zubehörteil (30) an dem Zubehörträger (40) befestigt ist.

3. Zubehör-Montagestruktur (1) nach Anspruch 1, wobei die Blockierrippen (13) in einem Abstand zueinander an einer Innenwand des Gehäuses (11) angeordnet sind und das Paar der Arretierblöcke (14) an einer Öffnung des Aufnahmeschlitzes (12) angeordnet ist.

4. Zubehör-Montagestruktur (1) nach Anspruch 3, wobei das Gehäuse (11) eine zwischen der Innenwand und jedem Arretierblock (14) angeordnete Führungsschiene (15) umfasst und die Führungsschiene (15) eine Führungsschräge (151) umfasst, die an ihrem dem Armkörper (21) zugewandten Ende angeordnet ist.

5. Zubehör-Montagestruktur (1) nach Anspruch 4, wobei die Abdeckung (22) ein Paar Seitenwände (221) umfasst und die Abdeckung (22) durch jede Seitenwand (221) entlang der Führungsschräge (151) und der Führungsschiene (15) in den Aufnahmeschlitz (12) eingeführt wird.

6. Zubehör-Montagestruktur (1) nach Anspruch 1, wobei das Zubehörteil (30) ein Paar Freiraumschlitze (34) aufweist, die mit dem Paar Verriegelungsschlitze (32) in Verbindung stehen, und die Schiebeabdeckung (10) so ausgebildet ist, dass sie sich in Längsrichtung durch das Paar von Arretierblöcken (14) entlang der Freiraumschlitze (34) in das Zubehörteil (30) hineinbewegt und sich seitlich in das Paar von Verriegelungsschlitzen (32) hineinbewegt.

7. Zubehör-Montagestruktur (1) nach Anspruch 1, wobei jeder Verriegelungsblock (31) ein trapezförmiger Block ist und jede Aufnahme (23) eine Positionierungsebene (231) und eine Positionierungsschräge (232) aufweist, die der Form jedes Verriegelungsblocks (31) entsprechen, und eine Seitenfläche (312) jedes Verriegelungsblocks (31) an der Positionierungsebene (231) anliegt, um die geneigte Oberseite (311) an der Positionierungsschräge (232) anliegen zu lassen.

8. Zubehör-Montagestruktur (1) nach Anspruch 1, wobei das Zubehörteil (30) eine mit dem Paar von Verriegelungsschlitzen (32) verbundene Trägerplatte (33) umfasst.

9. Zubehör-Montagestruktur (1) nach Anspruch 1, wobei sich an einem Boden der U-förmigen Öffnung jedes Verriegelungsschlitzes (32) ein elastischer Arm (36) befindet und jeder elastische Arm (36) eine Fase (360) aufweist, die sich an seinem dem Arretierblock (14) zugewandten Ende befindet.

## Revendications

1. Structure d'ensemble accessoires (1) pour un essuie-glace, la structure d'ensemble accessoires (1) comprenant :
un cache coulissant (10) comprenant un boîtier (11), ledit boîtier (11) comportant une fente de réception (12), plusieurs nervures de blocage (13) et une paire de blocs de verrouillage (14) situés dans la fente de réception (12) ;
un bras d'entraînement (20) comprenant un corps de bras (21) et un capot (22) relié au corps de bras (21), le capot (22) comportant plusieurs logements (23) formés sur deux de ses côtés, le capot (22) étant inséré dans la fente de réception (12) et est conçue de manière à pouvoir se déplacer par rapport au couvercle coulissant (10) le long des nervures de blocage (13) et de la paire de blocs de blocage (14) ; et
un accessoire monté dans le couvercle (22) (30) monté dans le couvercle (22), qui comprend une pluralité de blocs de verrouillage (31) et une paire de fentes de verrouillage (32), chaque bloc de verrouillage (31) présentant une face supérieure inclinée (311) et étant positionné le long de ladite face supérieure inclinée (311) dans chaque logement (23) ;
le couvercle coulissant (10) étant conçu pour se déplacer vers le corps de bras (21) afin de faire entrer la paire de blocs de verrouillage (14) dans la paire de fentes de verrouillage (32), et le couvercle coulissant (10) est positionné sur l'accessoire (30) par l'engagement de la paire de blocs d'arrêt (14) dans la paire de fentes de verrouillage (32),
**caractérisé en ce que**
chaque fente de verrouillage (32) est définie par une ouverture en forme de U et une saillie (35) disposée sur le côté supérieur de l'ouverture en forme de U, et une dimension de l'ouverture en forme de U correspond à la forme du bloc d'arrêt (14), et **en ce qu'**un côté de chaque bloc de verrouillage (14) est bloqué par la saillie (35) correspondante afin d'empêcher tout dégagement de l'ouverture en forme de U.

2. Structure d'ensemble accessoires (1) selon la revendication 1, comprenant en outre un support d'accessoires (40), l'accessoire (30) étant fixé au support d'accessoires (40).

3. Structure de montage d'accessoire (1) selon la revendication 1, dans laquelle les nervures de blocage (13) sont disposées à distance les unes des autres sur une paroi intérieure du boîtier (11) et la paire de blocs de verrouillage (14) est disposée au niveau d'une ouverture de la fente de réception (12).

4. Structure d'ensemble accessoires (1) selon la revendication 3, dans laquelle le boîtier (11) comprend un rail de guidage (15) disposé entre la paroi intérieure et chaque bloc de blocage (14), et le rail de guidage (15) comprend une face de guidage inclinée (151) disposée à son extrémité tournée vers le corps de bras (21).

5. Structure d'ensemble accessoires (1) selon la revendication 4, dans laquelle le couvercle (22) comprend une paire de parois latérales (221) et le couvercle (22) est inséré dans la fente de réception (12) par chaque paroi latérale (221) le long de la pente de guidage (151) et du rail de guidage (15).

6. Structure d'ensemble accessoires (1) selon la revendication 1, dans laquelle l'accessoire (30) comporte une paire de fentes d'espacement (34) qui communiquent avec la paire de fentes de verrouillage (32), et le couvercle coulissant (10) est conçu pour se déplacer longitudinalement à travers la paire de blocs d'arrêt (14) le long des fentes d'espace libre (34) à l'intérieur de l'accessoire (30) et pour se déplacer latéralement dans la paire de fentes de verrouillage (32).

7. Structure de montage d'accessoire (1) selon la revendication 1, dans laquelle chaque bloc de verrouillage (31) est un bloc trapézoïdal et chaque logement (23) présente un plan de positionnement (231) et une pente de positionnement (232) qui correspondent à la forme de chaque bloc de verrouillage (31), et une face latérale (312) de chaque bloc de verrouillage (31) vient en appui contre le plan de positionnement (231) afin de permettre à la face supérieure inclinée (311) de venir en appui contre la pente de positionnement (232).

8. Structure d'ensemble accessoires (1) selon la revendication 1, dans laquelle l'accessoire (30) comprend une plaque de support (33) reliée à la paire de fentes de verrouillage (32).

9. Structure de montage d'accessoire (1) selon la revendication 1, dans laquelle un bras élastique (36) est situé au fond de l'ouverture en forme de U de chaque fente de verrouillage (32), et chaque bras élastique (36) présente un chanfrein (360) situé à son extrémité tournée vers le bloc d'arrêt (14).
